# EUROPEAN PATENT APPLICATION

(11) **EP 3 670 996 A1**
(43) Date of publication of application: **24.06.2020**
(21) Application number: 18212901.5
(22) Date of filing: 17.12.2018
(51) Int. Cl.: F16L 55/134, F16L 55/179

(54) **BLADDER, DEVICE FOR INFLATING BLADDER AND ARRANGEMENT**

(71) Applicant: Picote Solutions Inc., Sammamish, WA 98075 (US)
(72) Inventor: Lokkinen, Mika, 10130 Tallinn (EE)
(74) Representative: Wilenius, Jami Juhani

(57) **Abstract**

The present disclosure concerns an inflatable bladder (20) having reducer portions (21, 22) on both ends of a tubular section (23) of the bladder. The reducer portions (21, 22) reduce the diameter of the bladder and thereby eliminate the need for folding the ends of the bladder.

The present disclosure also concerns a device (10) for inflating an inflatable bladder (20). The device comprises an elongated body (14) and bladder (11, 12) connectors at the ends of the body (14). The bladder connectors (11, 12) comprise inner (33, 43) and outer fittings (31, 41) between which the inflatable blabber (20) can be clamped.

## Description

### FIELD OF THE INVENTION

The present invention relates to inflatable bladders, especially of the type used in internal pipe linings.

### BACKGROUND OF THE INVENTION

Installed pipelines in buildings and underground can be rehabilitated without opening structures or digging the ground. The trenchless rehabilitation allows a quick and durable rehabilitation of pipes within buildings and underground pipelines. A resin impregnated liner is installed in a pipe with an inversion drum using air pressure to invert the liner into the pipe. Once the liner is installed air pressure is maintained on an elevated level until the resin within the liner settles and the liner forms a rigid pipe against the inner surface of the old pipe.

Branch points and junction points of pipes, where a lateral pipeline joins a main pipeline, are the most difficult sections for installing a liner. Typically a special piece of a liner is made for such sections. Two pieces of liner are attached together to replicate the form of the branch point in the pipeline. Typically these special liner pieces resemble letter T or Y. These special pieces are often called T-liners, Y-liners, branchtees, etc. Since all three branches of a T-liner or Y-liner are open, these can not be installed the same way as simple tubular liners described above. Instead, devices called bladders are used for installing for example a T-liner to a T-junction of a pipeline. In this case, a T-shaped bladder would be used and a resin impregnated T-liner would be disposed on to the bladder. The bladder is first deflated and then pushed with the T-liner into the T-junction of the pipeline. Once the bladder and the T-liner are adjusted in correct position, the bladder is inflated with air or water so that the inflated bladder pushes the T-liner against the T-junction of the pipeline. Pressure inside the bladder is maintained until the epoxy within the T-liner has cured. The bladder can then be deflated and removed from the pipeline and lining of other sections of the pipeline can continue.

EP2499414B1 discloses an apparatus for installing a liner in a pipe. The disclosed apparatus comprises a flexible tube assembly with a proximal and a distal end with collar fittings. An inflatable bladder is disposed over the tube and the ends of the bladder are secured to the collar fittings forming sealed connections with the collar fittings.

The solution disclosed in EP2499414B1 is a commonly used solution in the field. The bladder consists of one or two tubular sections of plastic or silicone material. Each end of the tubular sections is folded around a collar fitting and secured with a pipe clamp or cable ties and adhesive tape. This securing method is prone to air leaks and it's tedious to prepare each time the bladder is used.

### BRIEF DESCRIPTION OF THE INVENTION

An object of the present invention is to provide a bladder, a device for installing a bladder and/or an bladder arrangement that alleviates or eliminates the problems of the prior art.

One aspect of the present invention is an inflatable bladder having reducer portions on both ends of a tubular section of the bladder. The reducer portions reduce the diameter of the bladder and thereby eliminate the need for folding the ends of the bladder.

Another aspect of the invention is a device for inflating an inflatable bladder. The device comprises an elongated body and bladder connectors at the ends of the body. The bladder connectors comprise inner and outer fittings between which the inflatable blabber can be clamped.

The object of the invention is achieved with a bladder and a device for installing a bladder presented in independent claims. Advantageous embodiments are presented in dependent claims.

### BRIEF DESCRIPTION OF THE DRAWINGS

In the following the present invention is described in greater detail by means of preferred embodiments with reference to the accompanying drawings, in which
Figure 1 illustrates an inflatable bladder arrangement according to an embodiment of the invention;
Figure 2 illustrates an inflatable bladder according to an embodiment of the invention;
Figure 3 illustrates a device for inflating an inflatable bladder according to an embodiment of the invention;
Figure 4 illustrates details of the device of Figure 3.

### DETAILED DESCRIPTION OF THE INVENTION

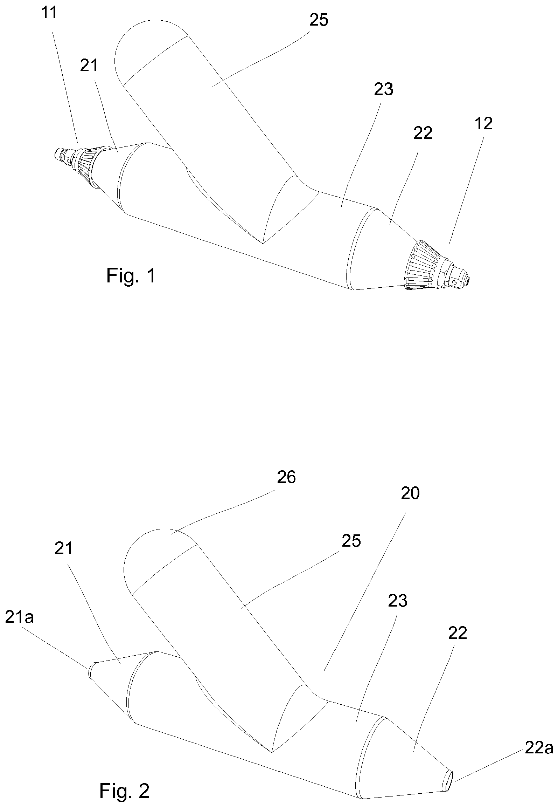

Figure 1 illustrates an inflatable bladder arrangement according to an embodiment of the invention. The arrangement consists of an inflatable bladder 20 having a first tubular section 23 and a second tubular section 25 in fluid connection with the first tubular section 23. The inflatable bladder 20 is clamped onto a device 10 for inflating the bladder 20 using a first bladder connector 11 and a second bladder connector 12 at opposite ends of the device 10. The invention is not limited to a certain number of tubular sections. For example, in embodiments of the invention, the second tubular section 25 can be omitted or a third tubular section can be added as well as fourth and fifth tubular sections.

Figure 2 illustrates an inflatable bladder 20 according to an embodiment of the invention. The inflatable bladder 20 is preferably configured for installing a liner in a pipeline by taking into account size and material of the bladder. The bladder 20 comprises a first tubular section 23 having a first end and a second end opposite to the first end. The bladder 20 further comprises a first reducer portion 21 at a first end of the first tubular section 23 and a second reducer portion 22 at a second end of the first tubular section 23, opposite to the first end of the tubular section 23. The first tubular section and both reducer portions can be fabricated as a single piece or each as a separate piece assembled together to form a single continuous bladder. The first reducer portion 21 and the second reducer portion 22 each have an aperture 21a, 22a into the bladder 20. The apertures 21a, 22a are arranged at distal ends of the bladder 20. The apertures have a smaller diameter than diameter of the first tubular section 23 and thus the reducer portions 21, 22 reduce the diameter of the bladder 20 towards distal ends of the bladder. The reduced diameter of the apertures eliminates the need for folding the bladder in order to attach it to the bladder connectors 11, 12 of the device 10 in an air-tight manner. Preferably the diameter of said apertures 21a, 22a is 10 mm to 40 mm and more preferably 15 mm to 30 mm. Preferably the diameter of said apertures 21a, 22a is at most 50 % of the diameter of the first tubular section 23 and more preferably at most 30 % of the diameter of the first tubular section 23.

In an embodiment, the diameter of the first reducer portion 21 and the second reducer portion 22 decreases along a shape of a cone, preferably along a shape of a concentric cone but also a shape of an eccentric cone can be used. The wider end of the cone shape is closer to the first tubular section 23 of the bladder and the narrower end the cone shape is closer to the aperture 21a, 22a of the reducer portion 21, 22. The diameter of the reducer portion can also decrease along other shapes, such as a half of a sphere, a paraboloid or a combination of the previously mentioned shapes. Also step-wise reduction of the diameter can be used.

In an embodiment of the invention, the inflatable bladder 20 comprises a second tubular section 26 having an open end and a closed end 26. Preferably the closed end forms a shape of a cone, a paraboloid or a half of a sphere and is located opposite to the open end. The first tubular section 23 has a sidewall opening defined therein and the open end of the second tubular section 26 is connected to the first tubular section 23 at said sidewall opening so that there is fluid communication between the first tubular section 23 and the second tubular section 25. The second tubular section 26 is preferably in 30° to 150° and to the first tubular section 23 and more preferably in 45° to 135° degree angle to the first tubular section 23. In an embodiment said the first tubular section 23 and said second tubular section 25 are perpendicular to each other.

In an embodiment, the inflatable bladder 20 comprises a third tubular section having an open end and a closed end. Preferably the closed end forms a shape of a cone, a paraboloid or a half of a sphere and is located opposite to the open end of the third tubular section. The first tubular section 23 has a second sidewall opening defined therein and the open end of the third tubular section is connected to the first tubular section 23 at said second opening in the sidewall so that there is fluid communication between the first tubular section 23, the second tubular section 25 and the third tubular section. In similar manner, further tubular sections can be disposed on the first tubular section 23.

In an embodiment, the inflatable bladder 20 is made of silicone or comprises silicone at least 90 weight-%. Preferably, the inflatable bladder is reinforced with fibres preventing expansion of the bladder beyond a predetermined level of expansion in order to prevent rupture of the inflatable bladder. The fibres can be for example textile fibres disposed within the silicone mass. The fibres can be in a form of a net covering at least partially the bladder 20. Also other types of materials can be used, such as rubber, plastic, textile and combinations thereof.

The bladder 20 can be manufactured in one piece by casting it in a mold or by injection molding. The bladder can also be manufactured part by part and then assembled together. The bladder can be divided e.g. to separate tubular parts, closing portions 26 of second tubular section 25 and further tubular sections, and reducer portions 21, 22 of the first tubular section 23. The parts can be assembled together by using a suitable adhesive or by using the same material as the parts, for example silicone for silicone parts. Silicone bonds very well to silicone. However, when using a second silicone step, a preferable way to adhere to silicone is when the material is not fully crosslinked (cured). It would be advisable not to postbake the parts prior to performing the silicone adhesion step.

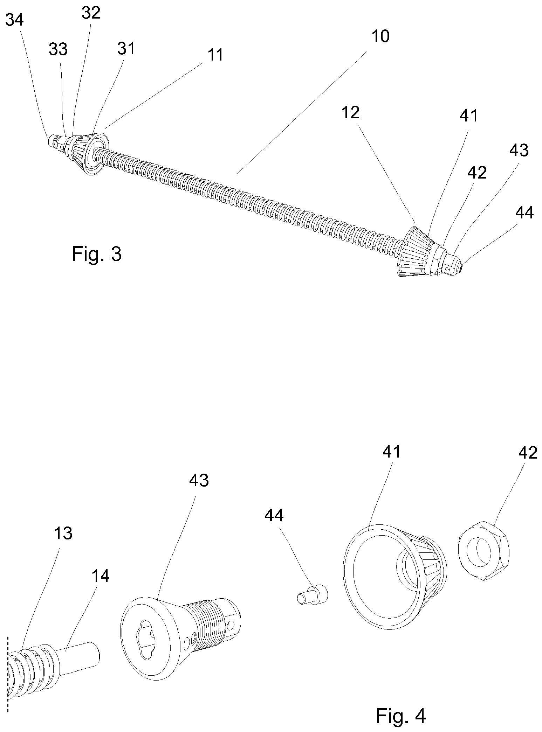

Now referring to Figure 3 which illustrates a device 10 according to an embodiment of the invention for inflating an inflatable bladder 20 such as the bladder described herein. Figure 4 illustrates details of the device of Figure 3, especially the second bladder connector 12.

In Figure 3 is a device 10 for inflating an inflatable bladder 20. The device comprises an elongated flexible body 14. The body can be a tube or a rod of a flexible material, or a flexible wound steel cable. The body 14 has a first bladder connector 11 at a first end of the body and a second bladder connector 12 at a second end of the body, opposite to the first end of the body. The device also comprises an inlet 34 for pressurized air to be used in inflating the bladder.

The first bladder connector 11 and the second bladder connector 12 both comprise an outer fitting 31, 41, an inner fitting 33, 43 and clamping means 32, 42 for clamping an inflatable bladder between said outer fitting and said inner fitting of the bladder connectors 11, 12. So instead of using pipe clamps, cable ties and adhesive tape for attaching the bladder to the device, the bladder is clamped between the inner and outer fittings of the bladder connector. Preferably the inner and outer fittings are sized to match the distal ends of the bladder so that folding of the bladder is avoided and thereby an airtight attachment is more easily achieved.

In an embodiment, the outer fitting 31, 41 preferably comprises a concentric conical section on its inner side. Similarly, the inner fitting 33, 43 comprises a concentric conical section on its outer side. The conical section of the inner fitting is configured to be disposed at least partially into the conical section of the outer fitting. Also eccentric conical shapes can be used. Preferably the ascending angle of the conical shape on the inner fitting is the same as the ascending angle of the conical shape on the outer fitting or at least within 5° of each other. The same angle yields larger contact area to the bladder and provides a longer lifetime. A slightly different ascending angle, e.g. less than 5°, yields a smaller contact are to the bladder but provides a better seal compared to same angles when applying the same clamping force. Also other shapes than conical shapes can be used, such as a half of a sphere, a paraboloid or a combination of the previously mentioned shapes. Also step-wise reduction of the diameter can be used.

In an embodiment, clamping means comprise threads disposed on the inner fitting 33, 43 and a threaded element 32, 42, wherein the outer fitting 31, 41 is disposed between said inner fitting 33, 43 and said threaded element 32, 42. Threads on the inner fitting can be inner threads and the threaded element a bolt in this case. Threads on the inner fitting can also be outer threads and the threaded element a nut 32, 42 in that case. Also other types of clamping means can be used.

The conical section of the inner fitting 33, 43 is inserted into the bladder 20 by slightly stretching the aperture 21a, 22a of the bladder such that the reducer portion 21, 22 of the bladder settles against the conical portion of the inner fitting. The outer fitting 31, 41 is the placed onto the reducer portion of the bladder such that the reducer portion is partially between the conical sections of the inner and outer fittings. Now tightening the clamping means, e.g. a nut 32, 42 on outer threads of the inner fitting, forces the conical shapes of the inner and outer fittings closer together thereby clamping and securing the bladder between the inner and outer fittings of the bladder connector 11, 12.

In an embodiment, the device further comprises a helical spring 13 around said elongated flexible body 14. Use of a spring adds both stiffness of the body but also elasticity of the body as the helical spring is biased to return to its shape after bending.

In an embodiment the inner fitting 33 of the first bladder connector 11 comprises the inlet 34 for pressurized air. The inlet is in fluid connection with the body 14 of the device so that air flowing in through the inlet ends up inside a bladder attached to the device. The inner fitting 33 can have a through hole or a channel for the pressurized air to flow through it. The inner fitting 43 of the second bladder connector 12 can comprise a safety valve 44 for releasing pressurized air. The safety valve 44 is in fluid connection with the body 14 of the device so that excessive pressure is released from inside the bladder through the safety valve. The inner fitting 43 can have a through hole or a channel for the pressurized air to flow through it.

An embodiment of the invention is an inflatable bladder arrangement. The arrangement comprises an inflatable bladder 20 described within the present disclosure and a device 10 described within the present disclosure for inflating the inflatable bladder 20. In addition, the arrangement can comprise air hose configured to be attached to the inlet 34 of the inner fitting of the first bladder connector 11. Said air hose is flexible but preferably stiff enough to push, pull and turn the device 10 with a bladder 20 attached to it. Alternatively, the air hose can house a steel wire within the air hose which facilitates pushing, pulling and turning the device 10 inside a pipeline.

It will be obvious to a person skilled in the art that, as the technology advances, that the inventive concept can be implemented in various ways. The present invention and its embodiments are not limited to the examples described above but may vary within the scope of the claims.

## Claims

1. An inflatable bladder (20) for installing a liner in a pipeline, the bladder (20) comprising a first tubular section (23), **characterized in that** the bladder (20) further comprises a first reducer portion (21) at a first end of the first tubular section (23) and a second reducer portion (22) at a second end of the first tubular section (23), opposite to the first end of the tubular section (23), wherein said first reducer portion (21) and said second reducer portion (22) each have an aperture (21a, 22a) into the bladder (20), said apertures having a smaller diameter than diameter of the first tubular section (23).

2. An inflatable bladder (20) according to claim 1, wherein diameter of said apertures (21a, 22a) is 10 mm to 40 mm.

3. An inflatable bladder (20) according to claim 1, wherein diameter of said apertures (21a, 22a) is at most 50 % of the diameter of the first tubular section (23).

4. An inflatable bladder (20) according to any one of claims 1 to 3, wherein diameter of said first reducer portion (21) and said second reducer portion (22) decreases along a shape of a concentric cone.

5. An inflatable bladder (20) according to any one of claims 1 to 4, wherein the bladder (20) comprises a second tubular section (26) having an open end and a closed end (26) opposite to the open end, the first tubular section (23) having a sidewall opening defined therein and the open end of the second tubular section (26) connected to the first tubular section (23) at said sidewall opening so that there is fluid communication between the first tubular section (23) and the second tubular section (25).

6. An inflatable bladder (20) according to any one of claims 1 to 5, wherein said bladder is made of silicone reinforced with fibres preventing expansion of the bladder beyond a predetermined level of expansion.

7. A device (10) for inflating an inflatable bladder (20), the device comprising an elongated flexible body (14) having a first bladder connector (11) at a first end of the body (14) and a second bladder connector (12) at a second end of the body (14) opposite to the first end of the body (14), and an inlet (34) for pressurized air, **characterized in that** the first bladder connector (11) and the second bladder connector (12) both comprise an outer fitting (31, 41), an inner fitting (33, 43) and clamping means (32, 42) for clamping an inflatable bladder between said outer fitting and said inner fitting of the bladder connectors.

8. A device (10) according to claim 7, wherein said outer fitting (31, 41) comprises a concentric conical section on its inner side and said inner fitting (33, 43) comprises a concentric conical section on its outer side, said conical section of the inner fitting (33, 43) is configured to be disposed at least partially into the conical section of the outer fitting (31, 41).

9. A device (10) according to claim 7 or 8, wherein said clamping means comprise threads disposed on the inner fitting (33, 43) and a threaded element (42), wherein the outer fitting (31, 41) is disposed between said inner fitting (33, 43) and said threaded element (42).

10. A device (10) according to any one of claims 7 to 9, wherein the device further comprises a helical spring (13) around said elongated flexible body (14).

11. A device (10) according to any one of claims 7 to 10, wherein the inner fitting (33) of the first bladder connector (11) comprises the inlet (34) for pressurized air, the inlet (34) being in fluid connection with the body (14) of the device.

12. A device (10) according to any one of claims 7 to 11, wherein the inner fitting (43) of the second bladder connector (12) comprises a safety valve (44) for releasing pressurized air, the safety valve (44) being in fluid connection with the body (14) of the device.

13. An inflatable bladder arrangement, **characterized in that** the arrangement comprises an inflatable bladder (20) according to any one of claims 1 to 6 and a device (10) according to any one of claims 7 to 12 for inflating the inflatable bladder (20).
